# EUROPEAN PATENT APPLICATION

(11) **EP 3 260 303 A1**
(43) Date of publication of application: **27.12.2017**
(21) Application number: 16176162.2
(22) Date of filing: 24.06.2016
(51) Int. Cl.: B60B 27/00, B60B 27/02, F16C 35/063, F16C 19/38

(54) **EXTENDED LENGTH BEARING CONE SYSTEM**

(71) Applicant: KIC LLC, Vancouver, WA 98660 (US)
(72) Inventor: Fakhoury, Omar J., Vancouver, WA Washington 98683 (US); Schneider, John, Vancouver, WA Washington 98660 (US)
(74) Representative: Fleuchaus, Michael A.

(57) **Abstract**

A wheel hub and bearing assembly including a pair of bearings and a wheel hub configured to receive the pair of bearings. The pair of bearings spaced an axial distance apart within the hub and disposed on bearing lands respectively. At least one of the pair of bearings having an extended inner bearing cone extending at least partially along the axial distance separating the pair of bearings.

## Description

### BACKGROUND

Wheel hubs are a vital component of wheeled vehicles as they provide the connection between the vehicle structure and the rotating wheel. The wheel hub typically includes a pair of bearings that allow the free rotation of the wheel hub about a spindle extending from the vehicle structure. The bearings are placed spaced apart within the wheel hub and held in place and proper orientation by the fastening of the hub onto the spindle.

When mounting bearings within a wheel hub, the proper amount of tightening is required. Incorrect torque applied to the spindle nut can cause uneven loading of the bearings causing adverse wear or other potentially dangerous situations. If the nut is over torqued, an undue amount of lateral pressure may be exerted on the bearings, constraining them and causing them to overheat during use. Overheated bearings can seize and stop the wheel rotating; a wheel seizing during use can cause dangerous conditions for the user. If the nut is under torqued, the hub and bearings can move laterally along the spindle causing damage to the oil seal which, in turn, could cause loss of lubrication. In either scenario, the final outcome could be potential loss of the wheel and hub assembly due to the lateral force exerted during turning operations. Therefore, proper tightening of the nut is required for safe operation of the attached wheel.

To assist a user in properly loading the bearings within the wheel hub, a complicated and detailed procedure for torquing the spindle nut was developed. To further simplify this procedure, a bearing spacer was developed that helped to maintain the bearing spacing and orientation within the wheel hub, ensuring proper loading of the bearings. In order for this system to be effective and efficient, precise tolerancing and machining of portions of the wheel hub and the intervening bearing spacer are required. Such precise tolerancing and machining necessarily increases the cost of the parts as more and precise work must be performed before the system can be delivered and installed.

There exists a need for an improved wheel bearing spacing system that is both easy to install and reduces the overall costs and potential for machining error.

### BRIEF DESCRIPTION OF THE DRAWINGS

FIG. 1A is a cross-section in perspective view of a standard straight spindle bearing.
FIG. 1B is a further cross-section in perspective view of the embodiment of FIG. 1A including a straight spindle.
FIG. 2 is a cross-section in perspective view of a standard straight spindle bearing utilizing a standard spacer system.
FIGS. 3A is a cross-section in perspective view of a pair of bearings within a wheel hub for use with a straight spindle according to an embodiment of the invention.
FIG. 3B is a further cross-section in perspective view of the embodiment of FIG. 3A including a straight spindle.
FIG. 4A is a cross-section in perspective view of a pair of bearings within a wheel hub for use with a straight spindle according to a further embodiment of the invention.
FIG. 4B is a further cross-section in perspective view of the embodiment of FIG. 4A including a straight spindle.
FIG. 5A is a cross-section in perspective view of a pair of bearings within a wheel hub for use with a tapered spindle according to a further embodiment of the invention.
FIG. 5B is a cross-section view in profile of the embodiment of FIG. 5A.
FIG. 6 is a cross-section view of a pair of bearings within a wheel hub for use with a tapered spindle according to a further embodiment of the invention.
FIG. 7 is a cross-section view of a pair of bearings within a wheel hub for use with a tapered spindle according to a further embodiment of the invention.
FIG. 8 is a cross-section view of a pair of bearings within a wheel hub for use with a tapered spindle according to a further embodiment of the invention.

### DETAILED DESCRIPTION

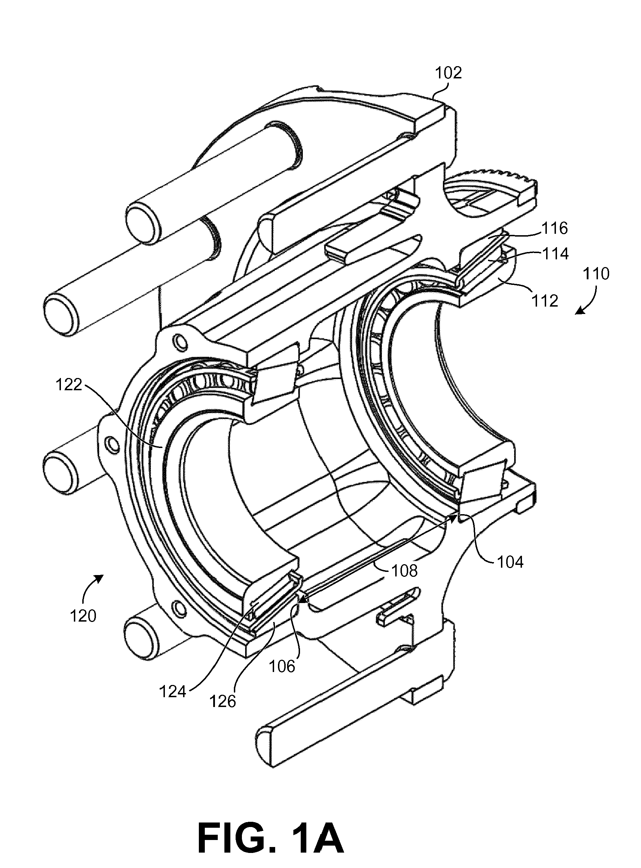

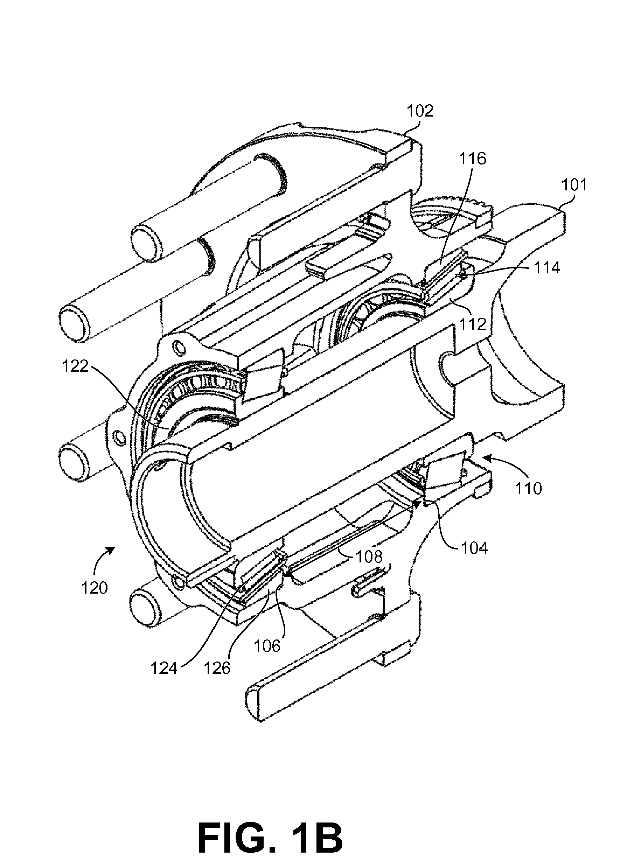

FIGS. 1A-1B are cross-sections in perspective view of a standard straight spindle 101, such as a P-spindle, wheel hub and bearing assembly. In this design, the bearings 110 and 120 are placed in inner and outer bearing recesses 104 and 106 of the hub 102. The bearing cup 116 of the inner tapered roller bearing 110 is pressed into the bearing recess 104. Once the bearing cup 116 is in place, the inner bearing assembly consisting of tapered rollers 114 within an inner cone 112 is inserted to complete the inner bearing 110. The outer bearing 120 is inserted into the wheel hub 102 in a similar manner. The bearing cup 126 is pressed into the outer bearing recess 106 of the hub 102. The inner bearing cone 122, containing tapered rollers 124, is then inserted in cup 126 to complete the outer bearing 120.

In this system, the bearings, 110 and 120, and the bearing spacing 108 have standard tolerances, i.e., neither the bearings nor the bearing spacing are precisely machined to tight tolerances.

With the bearings 110 and 120 contained in the hub 102, a spindle (not shown) is then inserted through the hub. The spindle passes through the inner and outer bearings, 110 and 120, with the inner bearing 110 contacting a flange or surface of the spindle and a threaded portion of the spindle extending past the outer bearing 120. A spindle nut (not shown) is threaded onto the spindle 101 and tightened against the outer bearing 120. The tightening of the spindle nut compresses the bearings, 110 and 120, within the hub 102 and affixes the hub 102 to the spindle 101 for use.

Over or under tightening of the spindle nut can cause the bearings to overheat and/or cause the failure of the wheel hub. A precise procedure and a skilled technician are required to ensure that the hub and bearing are attached to the spindle correctly so as not to endanger the user or cause undue wear on the bearings.

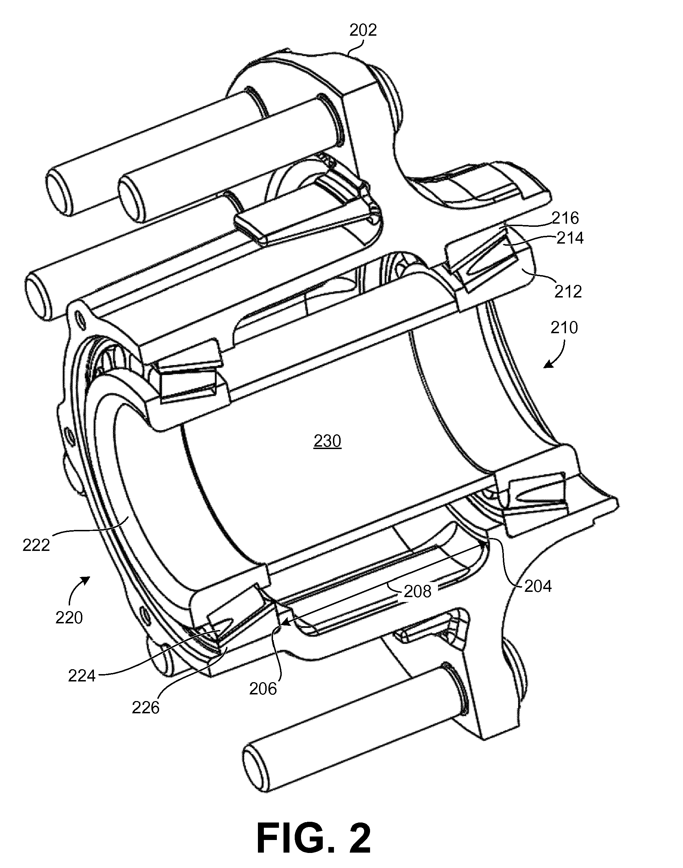

FIG. 2 is a cross-section in perspective view of a standard P-spindle wheel hub featuring a spacer. In order to overcome the issues associated with the proper tightening of the restraining nut of the standard P-spindle hub, a spacer was developed to span between and assist with proper spacing of the bearings. As with the previous design shown in FIGS. 1A-1B, the bearings 210 and 220 are inserted into the hub 202. The inner bearing cup 216 is pressed into the bearing recess 204 and the inner bearing cone 212, containing the tapered rollers 214, is inserted within the bearing cup 216. Before installing the outer bearing 220, the spacer 230 is inserted into the hub 204. The outer bearing cup 226 is pressed into the bearing recess 206 until contacting the spacer 230, and the outer bearing cone 222, containing the tapered rollers 224, is inserted to complete the outer bearing 220.

In the design shown in FIG. 2, the spacer 230 is required to be precisely sized and machined to properly space the bearings axially apart. The spacer 230 is machined to span the axial distance 208 between the two bearing lands 204 and 206 and to abut the cones 216 and 226 of the inner and outer bearings 210 and 220. The use of a spacer to assist with maintaining proper bearing spacing and alignment within the hub 202 removes the multi-step process required to properly affix the wheel hub 202 to the spindle.

In order to utilize the spacer system, the separate spacer 230, the bearings 210 and 220 and the hub 202 require precise machining, unlike the system of FIGS. 1A-1B. The hub 202 is required to have tighter tolerances for the spacing 208 of the bearings so that precise and known dimensions can be used to properly machine the spacer 230. Additionally, the bearings 210 and 220 also require tighter tolerancing so that they are correctly sized and mate flush with the spacer 230. The bearings 210 and 220 are typically machined to tolerances much tighter than the tolerances of the bearings of FIGS. 1A-1B. The same precision is also required of the spacer 230 to ensure the components integrate accurately.

The system of FIG. 2 requires three components, the bearings, 210 and 220, and the spacer 230 that must be precisely machined and assembled. The stacked nature of the components causes the tolerances to stack which leads to potentially increased error. To counteract this, each of the components individually is required to have a high degree of precision. With three components, this leads to increased costs due to the precision machining processes that are required.

Additionally, installing the system of FIG. 2 requires the alignment of three components, one of which, the spacer 230, is a free floating component between the other two, the bearings 210 and 220. This can mean increased time to install and align the system correctly.

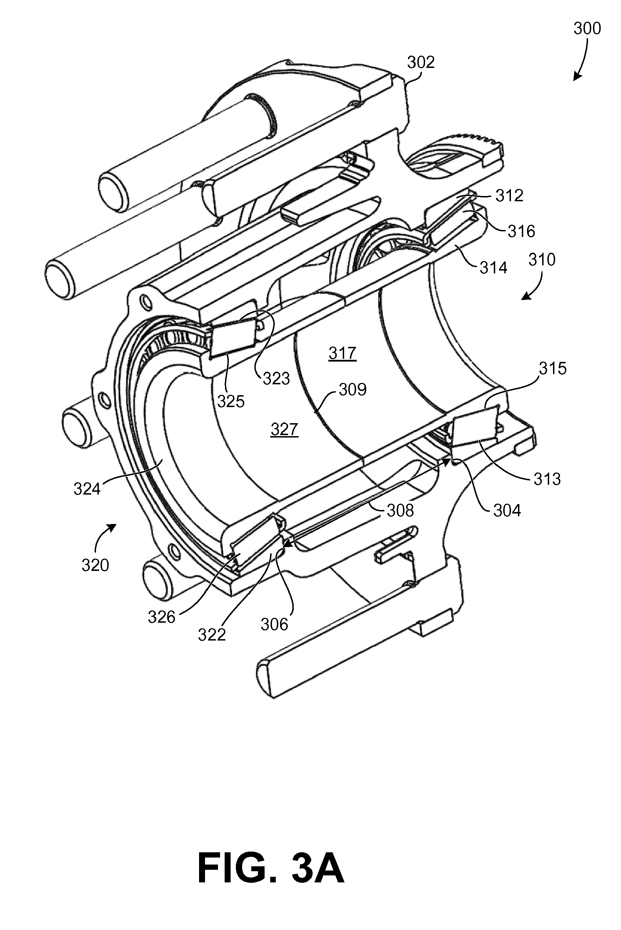

FIGS. 3A-3B illustrate a wheel hub and bearing assembly 300 for use with a straight spindle 301, such as an P-type trailer spindle according to an embodiment of the invention. The wheel hub 302 includes an inner bearing land 304 and an outer bearing land 306, on which an inner bearing 310 and outer bearing 320 are respectively disposed thereon. Each bearing, 310 and 320, includes a bearing cup 312, 322 which rests on or against the bearing lands 304 and 306 of the wheel hub 302. Each of the bearings, 310 and 320, further includes an extended bearing cone 314 and 324 disposed within the bearing cups 312 and 322. The bearing cones 314 and 324 include inward extensions 317 and 327, which extend axially through the wheel hub 302 and abut one another along line 309.

Each bearing 310, 320 includes a plurality of bearing elements 316, 326 that are constrained to the bearing cone 314, 324 by a bearing cage. The bearing elements 316, 326 are constrained by and allowed to rotate within the bearing cage between a first bearing surface 313, 323 of a bearing cup 314, 324 and a second bearing surface 315, 325 of an extended bearing cone 314, 324. The bearing elements 316, 326 reduce friction between the bearing cup 312, 322 and the bearing cone 314, 324, allowing the bearing cups 312 and 322 and hub 302 to freely rotate about the bearing cones 314 and 324 during vehicle movement. The first bearing surface 313, 323 and the second bearing surface 315, 325 can include profiles to restrain the bearing elements 316, 326 in a desired location(s) between the bearing cup 312, 322 and the bearing cone 314, 324.

In the embodiment of FIGS. 3A-3B, the wheel hub 302 and bearings 310 and 320 are for use with a straight spindle 301, such as a standard P-spindle found on a trailer. A straight spindle 301 has a constant diameter along its axial length. For use with such a spindle 301, the bearing cones 314, 324 of the bearings 310 and 320 have similar or identical inner diameters and do not require a reduction or enlargement of the diameter across their axial length.

The bearings 310 and 320 of the embodiment shown in FIGS. 3A-3B are tapered roller type bearings. The bearing elements 316, 326 are cylindrical roller elements constrained within a radially angled groove 315, 325 about an outer circumference of the bearing cone 314, 324 by a bearing cage (not shown). The bearing cage constrains the cylindrical roller elements 316, 326 to the radially angled groove 315, 325, allowing the cylindrical roller elements a single degree of freedom, that is rotation of each element 316, 326 about their own axis. The outer bearing cup 312, 322 include a radially angled surface 313, 323 paralleling the radially angled surface of the radially angled groove 315, 325.

Tapered roller bearings are used as they can take high radial and axial loads, typical of those experienced by a wheel hub and spindle assembly. Depending on the projected levels of loading the bearing can be expected to endure, alternative bearing designs can be used. Alternative bearing designs can include ball or roller bearings, featuring an extended bearing cone.

The new, self-spacing bearing design can be used with a standard wheel hub and spindle assembly, such as those used with traditional wheel bearings and bearing and spacer systems. The extended bearing cones remove the requirement for a spacer, while maintaining the ease of installation. Further, the removal of the spacer element reduces the number of components that require precise machining and tolerancing required for optimal bearing installation.

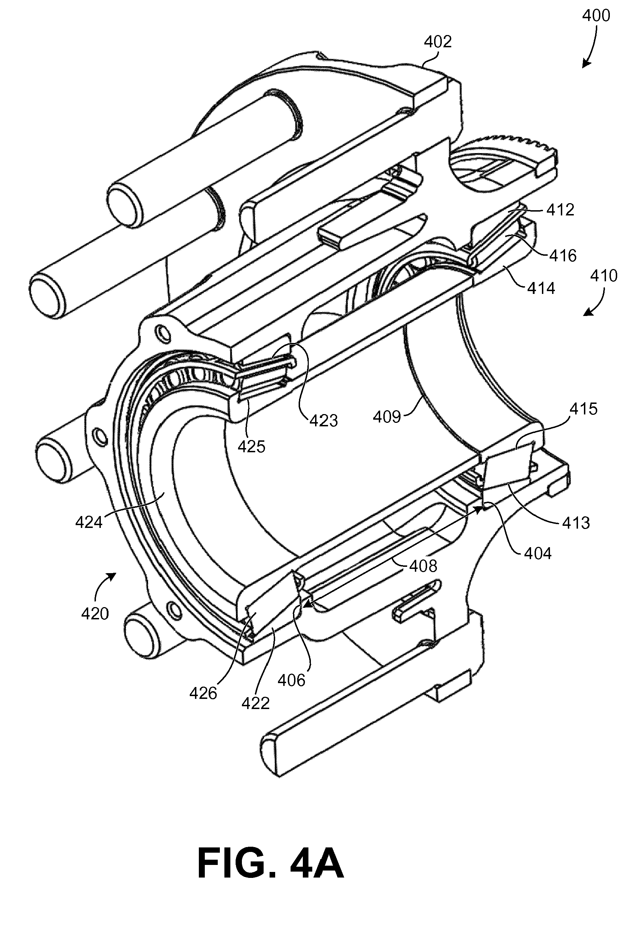

The bearings 310 and 320 are installed in the traditional manner, with the bearing cups 316 and 326 inserted and press-fitted into the machined bearing lands 304 and 306, respectively. The inner bearing cones 314 and 324, containing the roller elements 316 and 326, are inserted to complete the inner 310 and outer bearing 320. In the embodiment of FIGS. 3A-3B, the extended bearing cones 314 and 324 have the same length and meet at line 309 axially midway between the two bearing lands 304 and 306. Alternatively, the pair of extended bearing cones 314 and 324 can abut at any point axially between the two bearing lands 304 and 306. That is the length of the bearing cones 314 and 324 can be unequal, thus shifting the line 309 along which the bearing cones 314 and 324 abut to a position nearer the inner bearing 310 or outer bearing 320 (see line 409 of FIG. 4A).

The bearings 310 and 320, and the hub 302 require precise machining for proper bearing installation and running efficiency. A critical dimension is the bearing spacing, or the axial distance 308 between the bearing lands 304 and 306. To achieve a high degree of tolerance for the distance 308, the bearing lands 304 and 306 themselves and the bearing cups 312 and 322 require precision machining to establish the endpoints of the axial distance 308 within a high tolerance level. Further, the extended bearing cones 314 and 324 require precision machining on their abutting surfaces such that they adjoin in a plane orthogonal to and at a desired point along the axial distance 308.

Such precision machining is also inherently required within a spacer system such as that of FIG. 2. The spacing between the bearings requires a high degree of precision in order to properly size the intervening spacer of the system of FIG 2. Additionally, the intervening spacer between the bearing pair requires precision machining to properly interface with the bearings and space them the required distance apart. As such, the system of FIG. 2 requires an additional element and further machining which is rendered unnecessary by the new bearing spacing system, such as that of FIGS. 3A-3B, disclosed herein.

The spacer system of FIG. 2 requires more components and thus has an increased number of surface interfaces. With the high degree of precision and the tight tolerances, the number of interfaces between the elements of the system of FIG. 2 increases the "stack-up" effect of tolerances. That is, with each interface between elements, there is a dimensional tolerance for the length of the element along the axial distance between the bearings and a further surface tolerance for flatness of the surface for proper interfacing. In the spacer system, you have the interface between each of the two bearings 210 and 220 and the intervening spacer 230, and between each bearing 210 and 220 and the bearing lands 204 and 206. The new system, as shown in FIGS. 3A-3B, has fewer components and mating surfaces which creates a smaller stack up of tolerances than the system of FIG. 2. In the new system, you have a singular interface between the bearings and the interface between each bearing 310 and 320 and each bearing land 304 and 306. The reduced number of elements of the new system subsequently reduces the number of critical dimensions and tolerances, thereby minimizing the stack up of tolerances and simplifying the system and the manufacturing required.

FIGS. 4A-4B illustrate a wheel hub and bearing assembly 400 for use with a straight spindle 401, such as an P-type trailer spindle according to a further embodiment of the invention. In this embodiment of the wheel hub and bearing assembly 400, only one of the two bearings 410 and 420 includes an extended bearing cone 424. In the example of FIGS. 4A-4B, the extended bearing cone 424 of the outer bearing 420 extends the full axial distance 408 to abut the standard bearing cone 414 of the inner bearing 410 at line 409. With this system of bearings, only one of the bearings 420 includes the extended bearing cone 424, while the other bearing 410 includes a standard length bearing cone 414. Such a bearing can include a high precision bearing like that of the system of FIG. 2

The bearings 410 and 420 shown in the embodiment of FIGS. 4A-4B are tapered roller type bearings. The bearings 410 and 420 include bearing cups 412 and 422 configured to rest on the bearing lands 404 and 406 of the wheel hub 402. Bearing cones 414 and 424 are disposed within the bearing cups 412 and 422 of each of the bearings 410 and 420. Bearing elements 416 and 426 are disposed between the first bearing surfaces 413 and 423 of the bearing cups 412 and 422 and the second bearing surfaces 415 and 425 of the bearing cones 414 and 424 of the bearings 410 and 420.

The first bearing surfaces 413 and 423 and second bearing surfaces 415 and 425 are radially profiled to orient the cylindrical bearing elements 416 and 426 in the tapered bearing profile. Orientation of the bearing elements 416 and 426 in this manner allows the bearings 410 and 420 to sustain large radial and axial loads. Alternative bearing elements 416 and 426 and orientations can be selected based on the expected loading the bearing will experience during use.

As with the previous embodiment of FIGS. 3A-3B, a certain amount of precision machining is required in the full-length extended bearing cone system 400 of FIGS. 4A-4B. As with the system of FIGS. 3A-3B, the system 400 requires precise machining of the bearings 410 and 420 and the wheel hub 402. The bearing lands 404 and 406 are precisely machined to accept and orient the inserted, precision machined bearing cups 412 and 422 and to set a defined distance for the axial spacing 408. The extended bearing cone 424 and the standard length bearing cone 414 are machined to properly abut, or interface, one another at line 409, with the extended bearing cone 424 also precisely machined to extend across the entire axial distance 408.

Like the embodiment of FIGS. 3A-3B, the full-length extended bearing cone system 400 of FIGS. 4A-4B, the new system eliminates the requirement of an intervening spacer between the two bearings, simplifying the overall system and reducing costs. The full-length extended cone 424 of the bearing 420 functions as a spacer, ensuring that the bearings 410 and 420 maintain proper alignment and spacing while maintaining the simplified method and procedure for fastening the wheel hub 402 to a standard straight spindle 401, such as a P-type trailer spindle.

The assembly 300 of FIGS. 3A-3B and assembly 400 of FIGS. 4A-4B are configured to be used with standard straight, parallel, or P-, spindles 301 and 401. A parallel spindle 301, 401 has a constant diameter across the axial distance 308 and 408. The example assemblies 300 and 400 can be modified and sized to fit various and different standard P-spindle designs, such as those standard designs defined by the Society of Automotive Engineers (SAE).

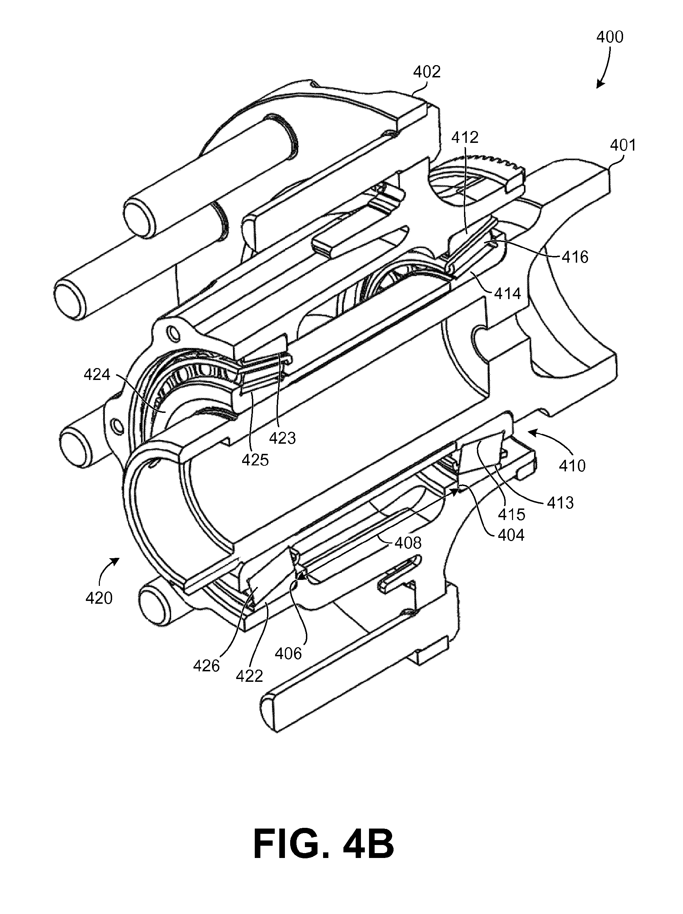

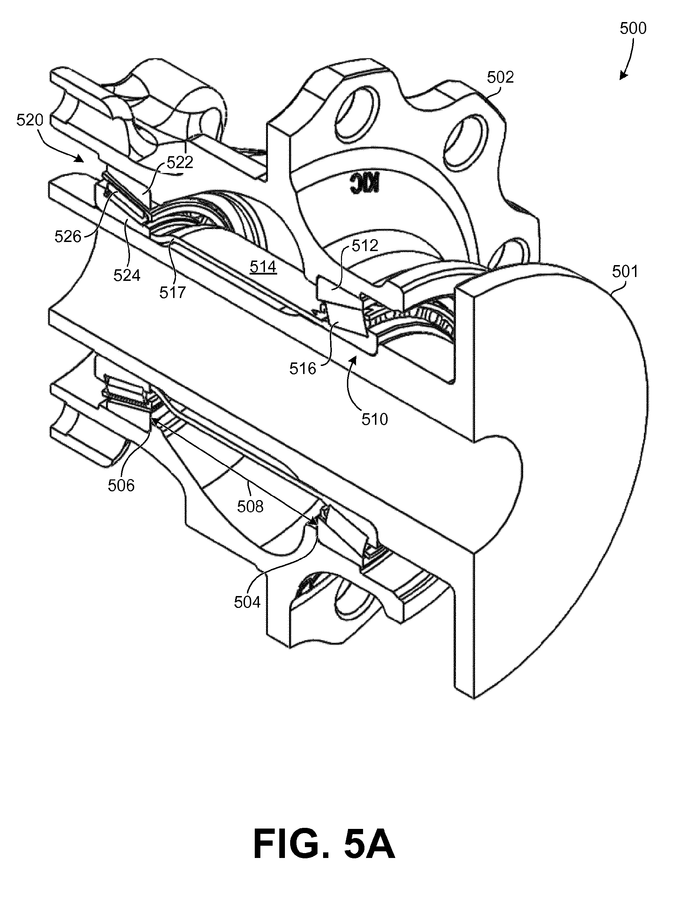

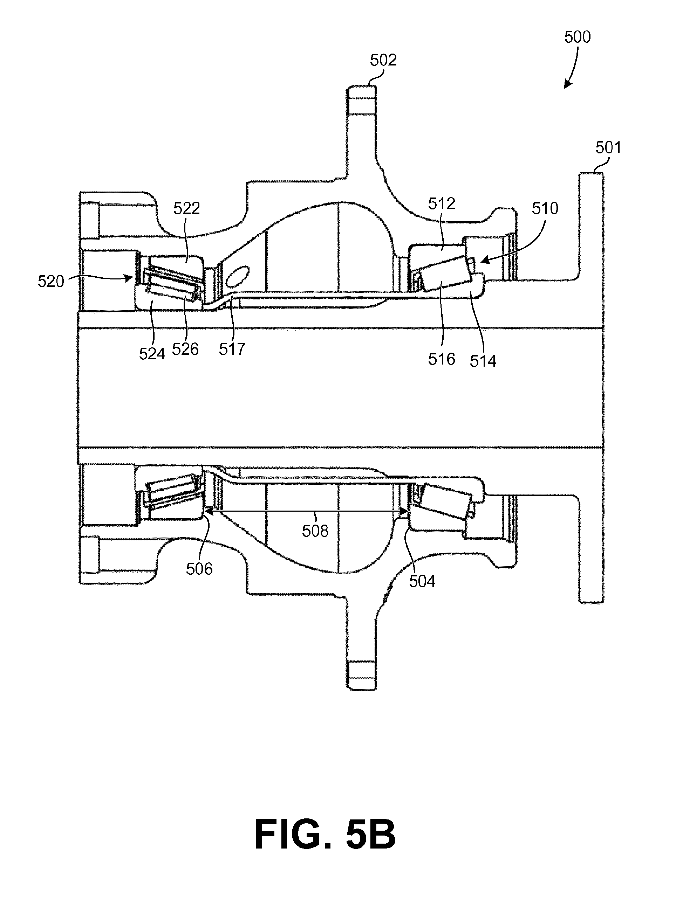

FIGS. 5A and 5B illustrate a further embodiment of a wheel hub and bearing assembly 500 for use with a tapered spindle, such as an R-series drive spindle. In the system 500, the larger diameter, inner bearing 510 includes a full-length extended bearing cone 514 which abuts the bearing cone 524 of the smaller diameter, outer bearing 520, similar to the system 400 of FIG. 4. However, in the assembly 500, the extended bearing cone 514 is necked 517 to decrease the diameter of extended bearing cone 514 to match the diameter of the smaller diameter, bearing cone 524 of the bearing 520.

The smaller diameter, outer bearing 520 includes a bearing cup 522 which rests and is supported by the outer bearing land 506 and a standard length bearing cone 524 and bearing elements 526. The outer bearing 520 can be a standard high-precision bearing having a smaller diameter to match the tapered profile of the spindle 501.

The larger diameter, inner bearing 510 includes a bearing cup 512 disposed on the inner bearing land 508 and the full-length bearing cone 514 and bearing elements 516. The full-length bearing cone 514 includes a neck portion 517 which reduces the diameter of the bearing cone 514 to match the diameter of the bearing cone 524 of the outer bearing 520. The reduction in diameter at the neck portion 517 allows the extended length bearing cone 514 of the assembly 500 to be used with alternative spindle designs, such as the standard R-series drive tapered spindle 501 of FIGS. 5A and 5B.

As with the previous systems, various elements of the assembly 500 require precision machining for optimal bearing performance and efficiency. That is, the bearing lands 504 and 506 require machining to align and properly space the bearing 510 and 520 an axial distance 508 apart. The inner bearing cones 514 and 524 require machining for proper abutment with the full-length inner bearing cone 514 of the bearing 510 requiring further machining to properly size the cone 514 to span the axial distance 508.

The wheel hub and bearing assembly 500 of FIGS. 5A and 5B are configured to be used with standard, tapered drive spindles 501, such as 200 and 200R drive spindles, and wheel hubs 502. The various components of the system 500 can be modified and sized to fit a variety of different standard tapered spindles as necessary or desired.

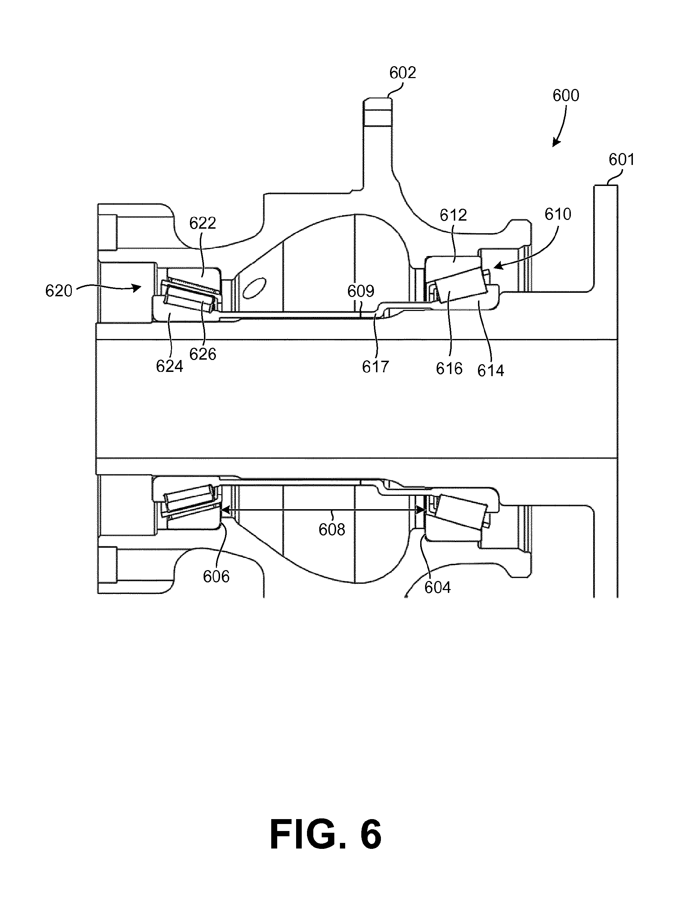

FIG. 6 illustrates a further embodiment of the wheel hub and bearing assembly 600 for use with a tapered spindle, such as an R-series drive spindle 601. In the example embodiment shown, both the inner bearing 610 and outer bearing 620 include an extended bearing cone 614 and 624, respectively. The two extended bearing cones 614 and 624 extend inward along axial distance 608 and abut along line 609.

The inner bearing 610 is a tapered roller bearing that includes a bearing cup 612 that rests on an inner bearing land 604 of a wheel hub 602 and an extended length cone 614 that includes bearing elements 616. The extended length cone 614 extends along the axially inward of the wheel hub 602 to abut an extended length bearing cone 624 of the outer bearing 620 along line 609 at a point along the axial distance 608. A necked portion 617, reduces a diameter of the extended length inner bearing cone 614 to match a diameter of an extended length outer bearing cone 624.

The outer bearing 620 is a tapered roller bearing that includes a bearing cup 622 that rests on an outer bearing land 606 of the wheel hub 602 and an extended length cone 624 that incudes bearing elements 626. The extended length outer bearing cone 624 extends axially inward of the wheel hub 602 to abut the extended length inner bearing cone 614 of the inner bearing 610 along line 609.

The diameter of the outer bearing cone 624 is smaller than the diameter of the inner bearing cone 614 to account for the tapered nature of the spindle 601. In alternative embodiments, the extended cones 614 and 624 of the bearings 610 ad 620, respectively, can meet at any point along axial distance 608. As such, one or both extended length bearing cones 614 or 624 can include a necked portion 617 to alter the diameter of the bearing cone, or cones, to account for the tapered nature of the spindle 601.

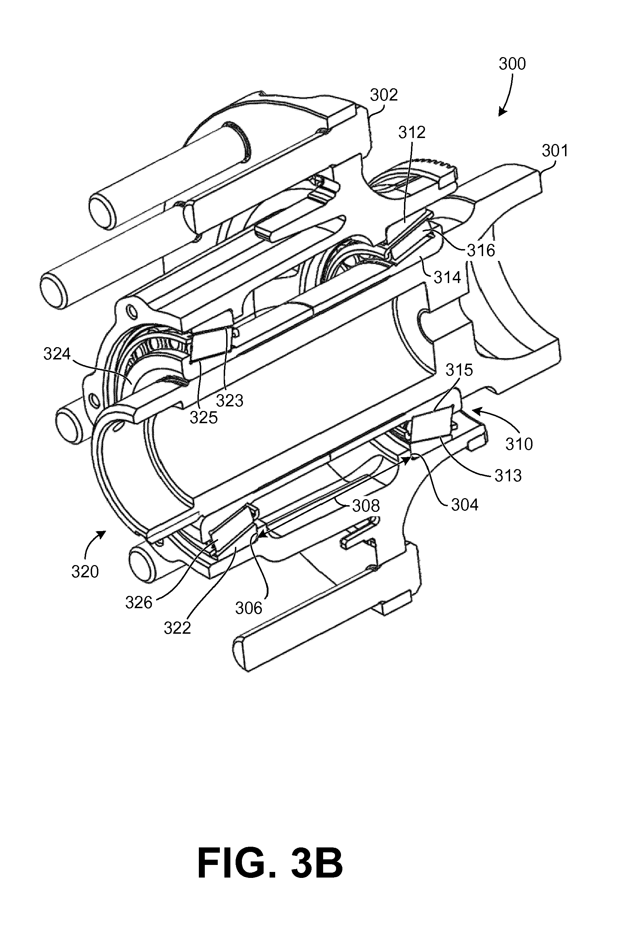

As with the previously discussed embodiments of FIGS. 3-5, the wheel hub 602 and bearings 610 and 620 of the system 600 require precision machining. Namely, the precise machining of the axial distance, or bearing land distance, 608 of the wheel hub 602 and the precision machining of the bearing cones 614, 624 and cups 612, 622.

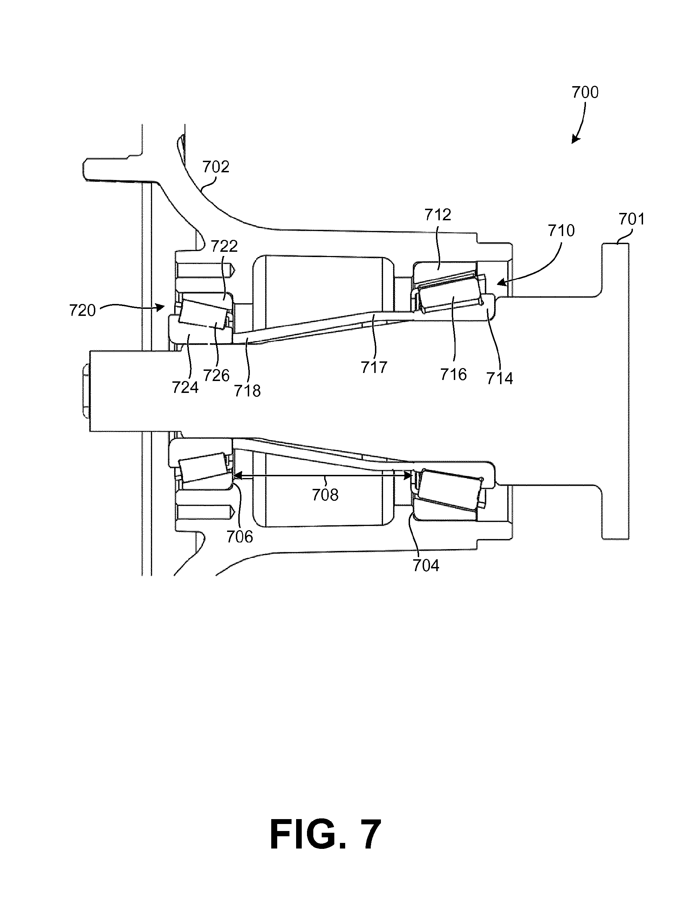

FIG. 7 illustrates a further embodiment of the wheel hub and bearing assembly 700 for use with a tapered spindle, such as an FF-series front-steer spindle 701. In the embodiment shown, an inner bearing 710 includes an extended bearing cone 714 that extends across an axial distance 708 to abut an outer bearing cone 724 of an outer bearing 720. The abutment of extended inner bearing cone 714 and outer bearing cone 724 maintains proper spacing between and the orientation of the inner 710 and outer bearing 720.

A wheel hub 702 is configured to receive the tapered spindle 701 and includes an inner bearing land 704 and outer bearing land 706, which are separated by the axial distance 708.

The inner bearing 710 includes a bearing cup 712 that rests on the inner bearing land 704, the extended inner bearing cone 714 and bearing elements 716 disposed therebetween. The extended inner bearing cone 714 has a first diameter that is maintained axially until a first transition 717. At the first transition 717, the extended inner bearing cone 714 begins to taper to a second, smaller diameter that is equal to the diameter of the outer bearing cone 724. At a second transition 718, the extended inner bearing cone 714 has tapered to the smaller, second diameter and abuts the outer bearing cone 724 squarely.

The outer bearing 710 includes a bearing cup 722 that rests on an outer bearing land 706, the outer bearing cone 724 and bearing elements 726 disposed therebetween. Due to the tapered nature of the FF-series spindle 701, the outer bearing 720 has a smaller diameter than that of the inner bearing 710. As such, the outer bearing cone 724 has a second, smaller, diameter than the first diameter of the extended inner bearing cone 714. The outer bearing cone 724 is of a standard length and does not feature an extended portion.

In the embodiment shown in FIG. 7, only the inner bearing 710 includes an extended bearing cone 714, with the other bearing cone, 724, being of standard length. Alternatively, both bearing cones, 714 and 724, can be extended and abut at any point along the axial distance 708, as desired. Further, either bearing cone 714, 724 can include the requisite transitions to reduce or enlarge the diameter of the bearing cone 714, 724 to accommodate the tapered nature of the spindle 701.

As with the previously discussed embodiments of FIGS. 3-6, the wheel hub 702 and bearings 710 and 720 of the system 700 require precision machining. Namely, the precise machining of the axial distance, or bearing land distance, 708 of the wheel hub 702 and the precision machining of the bearing cones 714, 724 and cups 712, 722.

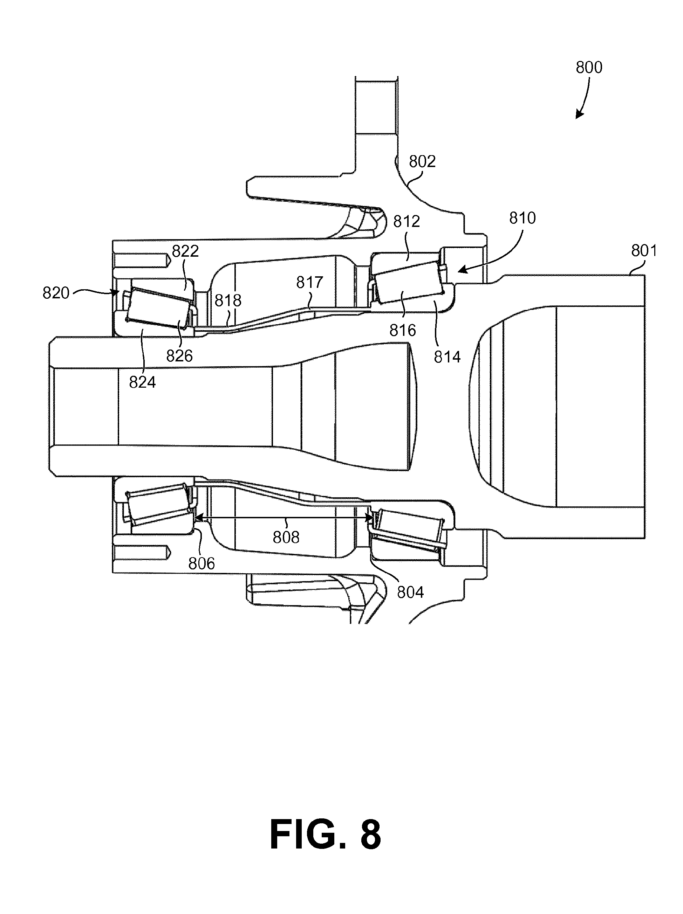

FIG. 8 illustrates a further embodiment of the wheel hub and bearing assembly 800 for use with a tapered spindle, such as an N-type trailer spindle 801. In the embodiment shown, the assembly 800 includes a wheel hub 802, inner bearing 810 and outer bearing 820.

The wheel hub 802 includes an inner bearing land 804 and an outer bearing land 806 that are separated an axial distance 808 apart. Due to the tapered nature of the spindle 801, the inner bearing land 804 has a larger, first diameter than the smaller, second diameter of the outer bearing land 806.

The inner bearing 810 has a first diameter and includes an inner bearing cup 812 that rests on the inner bearing land 804, an extended inner bearing cone 814 and bearing elements 816 disposed therebetween. The extended inner bearing cone 814 has a first diameter that begins to reduce at a first transition point 817 along the axial distance 808. At the first transition point 817, the extended inner bearing cone 814 begins to taper to the smaller, second diameter of the outer bearing cone 824. Once reduced to the second diameter at a second transition point 818, the extended inner bearing cone 814 abuts, or can further extend until abutting, the outer bearing cone 824. The abutment of the inner bearing cones 814 and 824 assists in maintaining proper bearing 810, 820 spacing and orientation while allowing for the use of the simplified tightening process.

The outer bearing 820 has a second diameter, smaller than the first diameter, and includes an outer bearing cup 822 that rests on the outer bearing land 806, the outer bearing cone 824 and bearing elements 826 disposed therebetween. In alternative embodiments, the outer bearing 820 can include an extended outer bearing cone 824 that extends to a point, or fully, along the axial distance 808 to abut the inner bearing cone 812.

As with the previously discussed embodiments of FIGS. 3-7, the wheel hub 802 and bearings 810 and 820 of the system 800 require precision machining. Namely, the precise machining of the axial distance, or bearing land distance, 808 of the wheel hub 802 and the precision machining of the bearing cones 814, 824 and cups 812, 822.

A further benefit of the systems shown in FIGS. 3-8, and described herein, is that they can be used with standard spindle designs, such as the P- and N- type spindles for trailers and the R-series driven spindles and the FF-series front-steer spindles used in trucks. As such, the system of an extended bearing cone or cones can be retrofitted into existing wheel hub and spindle systems without modification of the existing components. As a further benefit, bearing life and performance is not reduced as the extended length coned bearings will be subjected to identical or near identical mechanical and thermal loading as existing bearing designs due to their use in conjunction the existing standard spindles and wheel hubs, and thereby maintaining the standard bearing land distances and bearing dimensions.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A wheel hub and bearing assembly, comprising:
a wheel hub having a pair of bearing landings spaced an axial distance apart, and
the bearing assembly having a first bearing and a second bearing, each bearing including:
a bearing cup having a first bearing surface about an inner circumference and configured to rest on one of the bearing lands,
a bearing cone having a second bearing surface about an outer circumference and disposed within the bearing cup, and
a bearing element disposed between the first bearing surface of the bearing cup and the second bearing surface of the bearing cone,
wherein the bearing cone of the first bearing is configured to abut the bearing cone of the second bearing at a point along the axial distance.

2. The wheel hub and bearing assembly of claim 1, wherein the bearing cone of the first bearing has an axial length equal to an axial length of the bearing cone of the second bearing.

3. The wheel hub and bearing assembly of claim 1, wherein the bearing cone of the first bearing has an axial length different than an axial length of the bearing cone of the second bearing.

4. The wheel hub and bearing assembly of claim 1, wherein the bearing cone of the first bearing has an axial length extending across the axial distance.

5. The wheel hub and bearing assembly of claim 1, wherein the wheel hub, the first bearing and the second bearing are configured to receive a straight spindle.

6. The wheel hub and bearing assembly of claim 1, wherein the wheel hub, the first bearing and the second bearing are configured to receive a tapered spindle.

7. The wheel hub and bearing assembly of claim 1, wherein the bearing cone of the first bearing has a first diameter and extends to a point along the axial distance, terminating in a second diameter smaller than the first diameter.

8. The wheel hub and bearing assembly of claim 1, wherein the bearing cone of the first bearing has a first diameter and extends to a point along the axial distance, terminating in a second diameter larger than the first diameter.

9. The wheel hub and bearing assembly of claim 1, wherein the wheel hub and bearing assembly are configured to receive at least one of a P-type trailer spindle, an N-type trailer spindle, a R-series drive spindle and an FF-series front-steer spindle.

10. The wheel hub and bearing assembly of claims 1-9, wherein the first bearing and the second bearing are tapered roller bearings.

11. A tapered roller bearing, comprising:
an annular bearing cup having a first height and an angled inner circumference;
an annular bearing cone disposed within the annular bearing cup, the annular bearing cone having a second height greater than the first height and a radially angled groove about an outer circumference; and
a plurality of cylindrical rollers distributed within the angled groove and between the inner circumference of the annular bearing cup.
